# EUROPÄISCHE PATENTSCHRIFT

(11) **EP 1 658 705 B1**
(45) Veröffentlichungstag und Bekanntmachung des Hinweises auf die Patenterteilung: **07.10.2009**
(21) Anmeldenummer: 04766575.7
(22) Anmeldetag: 23.08.2004
(51) Int. Cl.: H04L 12/58

(54) **BEREITSTELLUNG EINER EINEM BENUTZER EINES KOMMUNIKATIONSDIENSTES ZUGEORDNETEN ANWESENHEITSINFORMATION**
PROVISION OF PRESENCE DATA ALLOCATED TO THE USER OF A COMMUNICATION SERVICE
MISE A DISPOSITION D'UNE INFORMATION DE PRESENCE AFFECTEE A UN UTILISATEUR D'UN SERVICE DE COMMUNICATION

(30) Priorität: 29.08.2003 DE 10340384
(43) Veröffentlichungstag der Anmeldung: 24.05.2006
(73) Patentinhaber: SIEMENS AKTIENGESELLSCHAFT, 80333 München (DE)
(72) Erfinder: KLUG, Karl, 83714 Miesbach (DE); LEDERER, Thomas, 82211 Herrsching (DE); MÜLLER, Harald, 82205 Gilching (DE)
(74) Vertreter: Fritzsche, Thomas
(86) Internationale Anmeldenummer: PCT/EP2004/051878
(87) Internationale Veröffentlichungsnummer: WO 2005/025157

(56) Entgegenhaltungen:
- WO-A-03/030003
- US-A1- 2002 083 136
- US-A1- 2003 130 014

## Beschreibung

Die vorliegende Erfindung betrifft ein Verfahren entsprechend dem Oberbegriff des Anspruchs 1 sowie ein Kommunikationssystem und ein Steuerungsprogramm. Ein solches Verfahren ist aus US 2002/083136 A1 bekannt.

Internet-basierte Instant-Messaging-Anwendungen zum Informationsaustausch innerhalb ausgewählter Benutzergruppen ohne von konventionellen E-Mail-Anwendungen bekannte Zeitverzögerungen erfreuen sich wachsender Beliebtheit. Typische Instant-Messaging-Anwendungen ermöglichen einem Benutzer eine Vorbereitung einer Nachricht an Mitglieder einer ausgewählten Benutzergruppe, auch als "buddy list" bezeichnet, und eine Übermittlung der Nachricht zum im wesentlichen sofortigen Empfang. In umgekehrter Richtung empfängt der Benutzer in analoger Weise Nachrichten von Mitgliedern der ausgewählten Benutzergruppe.

Aus WO 02/43351 ist bekannt, daß in einem Kommunikationssystem ein erster Server zur Bereitstellung von Programmanwendungen und zum Datenaustausch mit einem ersten Client und ein zweiter Server zum Empfang und zur Verwaltung von Anwesenheitsinformationen vorgesehen sind, die dem ersten Client zugeordnet sind. Anwesenheitsinformationen zeigen an, ob ein Benutzer aktuell an einem bestimmten Endgerät im Kommunikationssystem erreichbar ist. Der erste Server ist außerdem zum Datenaustausch mit einem zweiten Client auf Grundlage der zu dem ersten Client zugeordneten Anwesenheitsinformationen vorgesehen.

Die Anwesenheitsinformationen können bei dem in WO 02/43351 beschriebenen Kommunikationssystem zusätzlich mit einer Programmanwendung verknüpft sein. Greift ein Benutzer beispielsweise über ein Endgerät auf eine Programmanwendung zu, so ordnet die Programmanwendung dem Benutzer die Anwesenheitsinformation "aktiv" zu und überwacht am Endgerät Aktivitäten des Benutzers. Falls für einen bestimmten Zeitraum keine Aktivitäten des Benutzers erkennbar sind, so veranlaßt die Programmanwendung eine Übermittlung einer Kontrollmeldung an das Endgerät. Bestätigt der Benutzer die Kontrollmeldung am Endgerät, so bleibt dem Benutzer weiterhin die Anwesenheitsinformation "aktiv" zugeordnet. Andernfalls wird dem Benutzer die Anwesenheitsinformation "inaktiv" oder ein entsprechend passender Wert zugeordnet. Die dem Benutzer zugeordnete Anwesenheitsinformation kann auch Auswirkungen auf eine Zustellung von Nachrichten anderer Benutzer haben. Eine solche Nachricht wird beispielsweise nur dann zugestellt, wenn dem Benutzer auch tatsächlich die Anwesenheitsinformation "aktiv" zugeordnet ist. Andernfalls wird die Nachricht gelöscht oder an ein anderes durch die Anwesenheitsinformation bezeichnetes Ziel weitergeleitet.

Instant-Messaging-Systeme setzen grundsätzlich voraus, daß ein potentieller Adressat einer Nachricht erreichbar ist. Anders als bei E-Mail-Systemen, bei denen Verzögerungen von Nachrichtenübermittlung und -beantwortung üblich sind, ist bei Instant-Messaging-Systemen ein Versenden einer Nachricht an einen Adressaten, der die Nachricht erst Stunden oder Tage später empfängt, im allgemeinen unerwünscht. Daher kommen Vorkehrungen zur Ermittlung von genauen Anwesenheitsinformationen, die Benutzern in einem Kommunikationssystem zugeordnet sind, eine große Bedeutung zu.

Zur komfortableren Verwaltung von "buddy lists" können die Mitglieder einer ausgewählten Benutzergruppe in Gruppen eingeteilt werden, um die Übersichtlichkeit zu erhöhen. Ein weiteres Komfortmerkmal sind als "blocking lists" bezeichnete Sperrlisten, die es einem Benutzer ermöglichen, daß eine ihm zugeordnete Anwesenheitsinformation für vorgebbare weitere Benutzer nicht sichtbar ist. Alternativ dazu ist es möglich, daß diesen vorgebbaren Benutzern beispielsweise die Anwesenheitsinformation "abwesend" signalisiert wird, um auszudrükken, daß der Benutzer für die vorgebbaren weiteren Benutzer nicht verfügbar ist.

Der vorliegenden Erfindung liegt daher die Aufgabe zugrunde, ein effizientes Verfahren zur Bereitstellung einer einem Benutzer eines Kommunikationsdienstes zugeordneten Anwesenheitsinformation sowie geeignete Mittel zur Durchführung des Verfahrens anzugeben.

Diese Aufgabe wird erfindungsgemäß durch ein Verfahren mit den in Anspruch 1, ein Kommunikationssystem mit den in Anspruch 4 und ein Steuerungsprogramm mit den in Anspruch 5 angegebenen Merkmalen gelöst. Vorteilhafte Weiterbildungen der vorliegenden Erfindung sind in den abhängigen Ansprüchen angegeben.

Ein wesentlicher Aspekt der vorliegenden Erfindung liegt darin, daß eine Ermittlung von vorgebbaren ersten und zweiten Benutzern anhand eines aktivierten Dienstprofils erfolgt, das einem zur Benutzung eines Kommunikationsdienstes registrierten Benutzer zugeordnet ist. Eine Information, die einen Anwesenheitszustand des Benutzers bezeichnet, wird an einen Server zur Verwaltung von Anwesenheitsinformationen übermittelt. Die an den Server übermittelte Information wird dort als Anwesenheitsinformation gespeichert und für die vorgebbaren weiteren Benutzer verfügbar gemacht. Dem Benutzer werden wiederum Anwesenheitsinformationen, die zu den vorgebbaren zweiten Benutzern zugeordnet sind, verfügbar gemacht. Die Ermittlung der vorgebbaren ersten und zweiten Benutzer anhand eines Dienstprofils eröffnet dem Benutzer die Möglichkeit, gezielt und abhängig vom jeweiligen Anwendungskontext Einfluß auf eine Verteilung der ihm zugeordneten Anwesenheitsinformation ausüben zu können. Neben einer effektiveren Handhabung aufgrund erhöhter Benutzerfreundlichkeit bietet dies den Vorteil eines reduzierten Netzverkehrs, da eine unnötige Übermittlung von Anwesenheitsinformationen an unerwünschte Ziele durch eine gezielte Steuerung bereits von vornherein unterbunden wird.

Erfindungsgemäß wird auf Freigabe des zur Benutzung des Kommunikationsdienstes registrierten Benutzers einem ausgewählten weiteren Benutzer eine Berechtigung zur Veränderung einer Anwesenheitsinformation eingeräumt wird. Durch Einführung einer Stellvertreter-ähnlichen Berechtigung zur Veränderung der Anwesenheitsinformation zu einem Benutzer ergeben sich Vorteile im Hinblick auf eine schnelle und genaue Erfassung und Bereitstellung der Anwesenheitsinformation, die damit nicht mehr zwangsläufig ausschließlich dem Benutzer obliegt.

Entsprechend einer vorteilhaften Ausgestaltung der vorliegenden Erfindung ist der Kommunikationsdienst ein Instant-Messaging-Dienst. Dies ermöglicht Echtzeit-Kommunikation oder Kommunikation in nahezu Echtzeit.

Vorteilhafterweise wird die Anwesenheitsinformation für die vorgebbaren ersten bzw. zweiten Benutzer abrufbar verfügbar gemacht oder mittels einer Multicast-Nachricht an die vorgebbaren weiteren Benutzer übermittelt. Dies ermöglicht eine effiziente Übermittlung bzw. Verteilung der Anwesenheitsinformation.

Die vorliegende Erfindung wird nachfolgend an einem Ausführungsbeispiel anhand der Zeichnung näher erläutert. Es zeigt
- Figur 1: ein Anwendungsumfeld der vorliegenden Erfindung mit einem Server zur Bereitstellung eines Instant- Messaging-Dienstes und zur Verwaltung von Anwesen- heitsinformationen und mit mehreren Clients zur Be- nutzung des Instant-Messaging-Dienstes,
- Figur 2: eine graphische Übersicht mit einer beispielhaften Darstellung konfigurierter Dienstprofile,
- Figur 3: ein Diagramm über Meldungsaustausch zwischen den Clients und dem Server bei einer Bereitstellung von Anwesenheitsinformationen.
- Figur 4: ein Diagramm über Meldungsaustausch zwischen den Clients und dem Server bei einem Start einer In- stant-Messaging-Anwendung und bei einer Änderung von Anwesenheitsinformationen.

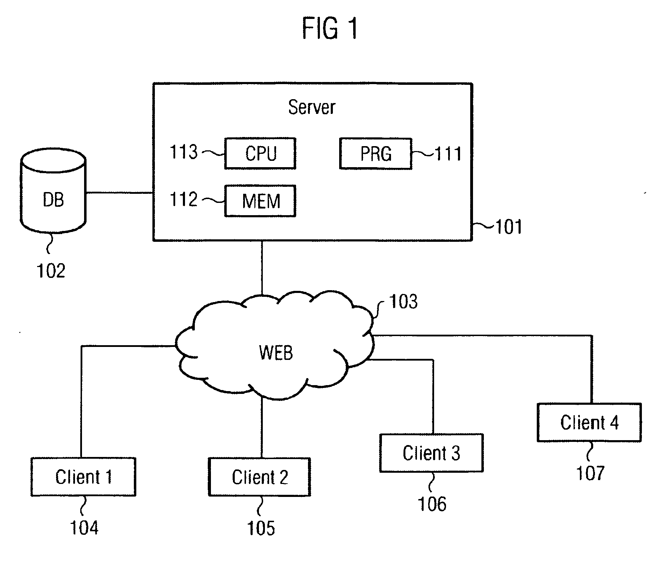

Das in Figur 1 dargestellte Anwendungsumfeld umfaßt einen Server 101, durch den ein Instant-Messaging-Dienst zur Nutzung an mehreren Clients 104 bis 107 bereitgestellt wird. Die Clients 104 bis 107 sind mit dem Server 101 über ein Datennetz 103, beispielsweise das Internet verbunden. Durch den Instant-Messaging-Dienst werden über den Server 101 Echtzeit-Kommunikationsverbindungen zwischen Clients aufgebaut, an denen ein jeweiliger Benutzer eine Instant-Messaging-Anwendung gestartet hat. Dem Server 101 kommt dabei insbesondere die Aufgabe der Steuerung und Überwachung der Kommunikationsverbindungen zwischen den Clients 104 bis 107 zu. Hierzu zählt beispielsweise auch die Überwachung der für die Bereitstellung des Instant-Messaging-Dienstes notwendigen Bandbreite und der Dienstgüte (Quality of Service).

Neben der Bereitstellung des Instant-Messaging-Dienstes kommt dem Server 101 die Aufgabe zu, Anwesenheitsinformationen zu Benutzern des Instant-Messaging-Dienstes zu verwalten. Vorteilhafterweise werden derartige Anwesenheitsinformationen bei einem Start einer Instant-Messaging-Anwendung an einem der Clients 104 bis 107 durch den Server 101 als Reaktion auf eine Anforderung eines Benutzers zur Bereitstellung einer Instant-Messaging-Anwendung erfaßt. Zur Speicherung der Anwesenheitsinformationen ist eine dem Server 101 zugeordnete Datenbank 102 vorgesehen. Außerdem nimmt der Server 101 die Aufgabe war, Anwesenheitsinformationen für einen Benutzer, der aktuell einen Instant-Messaging-Dienst nutzt, an vorgebbare erste Benutzer zu übermitteln. Die vorgebbaren ersten Benutzer können beispielsweise Mitglieder einer konfigurierten Benutzergruppe sein. Darüber hinaus werden dem Benutzer durch den Server 101 Anwesenheitsinformationen zu vorgebbaren zweiten Benutzern verfügbar gemacht, beispielsweise für Mitglieder einer "buddy list".

Anwesenheitsinformationen können beispielsweise mittels einer Multicast-Nachricht an die vorgebbaren weiteren Benutzer übermittelt werden. Alternativ dazu ist es möglich, die Anwesenheitsinformation für die jeweiligen Benutzer derart abrufbar verfügbar zu machen, daß nur die jeweiligen Benutzer berechtigt sind, die Anwesenheitsinformation abzufragen. Darüberhinaus ist der Server 101 zur Einräumung einer Berechtigung zur Veränderung der einem Benutzer zugeordneten Anwesenheitsinformation durch einen ausgewählten weiteren Benutzer vorgesehen, beispielsweise ein Stellvertreter. Voraussetzung ist, daß hierzu eine Freigabe des betroffenen Benutzers vorliegt.

Um dem Benutzer die Möglichkeit zu eröffnen, gezielt und abhängig vom jeweiligen Anwendungskontext Einfluß auf eine Verteilung der ihm zugeordneten Anwesenheitsinformation ausüben zu können, erfolgt eine Ermittlung der vorgebbaren ersten und zweiten Benutzer anhand eines Dienstprofils. Das Dienstprofil ist dem Benutzer zugeordnet, kann durch ihn individuell konfiguriert werden und wird ebenfalls durch den Server 101 verwaltet. Eine gleichzeitige Aktivierung mehrerer Dienstprofile ist durchaus möglich. Allerdings sollten in diesem Fall Regeln für eine Ausnahmebehandlung definiert werden, um eventuelle Widersprüchlichkeiten bei einer Anwendung miteinander kollidierender Dienstprofile auszuschließen.

Zur Wahrnehmung der beschriebenen Aufgaben ist auf dem Server 101 ein Steuerungsprogramm 111 installiert, daß in einen Arbeitsspeicher 112 des Servers 101 ladbar ist und dessen Codeabschnitte durch einen Prozessor 113 des Servers 101 ausführbar sind. Bei Ausführung des Steuerungsprogramms 111 wird eine Übermittlung einer Information, die einen Anwesenheitszustand eines zur Benutzung des Instant-Messaging-Dienstes registrierten Benutzers bezeichnet, an den Server 101 zur Verwaltung von Anwesenheitsinformationen veranlaßt. Des weiteren wird bei Ausführung des Steuerungsprogramms 111 die an den Server 101 übermittelte Information als eine dem Benutzer zugeordnete Anwesenheitsinformation gespeichert und für vorgebbare erste Benutzer verfügbar gemacht. Außerdem werden dem Benutzer zu vorgebbaren zweiten Benutzern zugeordnete Anwesenheitsinformationen verfügbar gemacht. Anhand eines dem Benutzer zugeordneten, aktivierten Dienstprofils erfolgt eine Ermittlung der vorgebbaren ersten und zweiten Benutzer. Diese Schritte werden ausgeführt, wenn das Steuerungsprogramm 111 auf dem Server 101 abläuft.

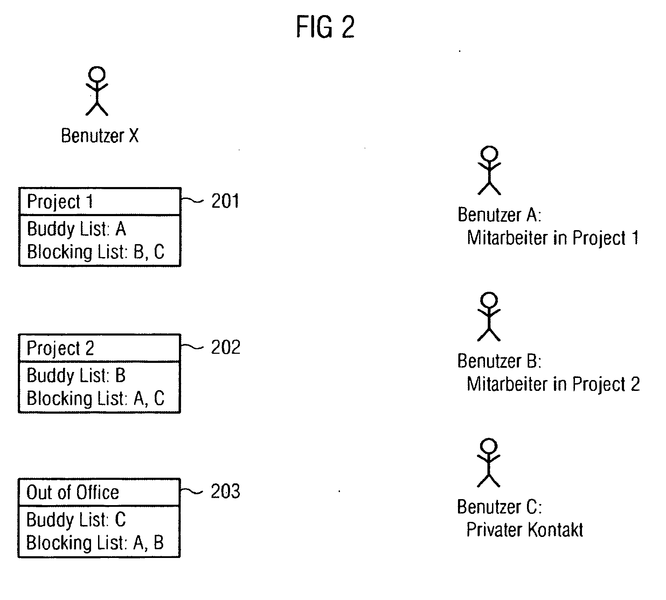

In Figur 2 sind beispielhaft konfigurierte Dienstprofile 201 bis 203 von Benutzer X und von den Dienstprofilen 201 bis 203 umfaßte weitere Benutzer, Benutzer A bis C, mit ihrem jeweiligen Bezug zu Benutzer X dargestellt. Die Benutzer X sowie A bis C können jeweils einen beliebigen Client 104 bis 107 nutzen. Ein erstes Dienstprofil 201 von Benutzer X ist für eine Mitarbeit in "Project 1" definiert. In einer "buddy list" zum ersten Dienstprofil 201 ist Benutzer A aufgeführt, der ebenfalls in "Project 1" mitarbeitet. Das erste Dienstprofil 201 ist mit dem Zweck eingerichtet worden, daß Benutzer X nur Kontakt zu Mitgliedern von "Project 1" unterhält und durch andere Benutzer nicht gestört wird. Aus diesem Grund sind Benutzer B, der in "Project 2" arbeitet, und Benutzer C, der einen privaten Kontakt darstellt, also einen Verwandten, Freund oder Bekannten, in einer "blocking list" zum ersten Dienstprofil 201 aufgeführt.

Zusätzlich zur Mitarbeit in "Project 1" arbeitet Benutzer X auch noch in "Project 2" mit. Aus diesem Grund ist für Benutzer X ein zweites Dienstprofil 202 eingerichtet, für dessen Erstellung die gleichen Überlegungen gelten sollen wie für das erste Dienstprofil 201. Aus diesem Grund umfaßt die "buddy list" zum zweiten Dienstprofil 202 Benutzer B, während Benutzer A und C in die "blocking list" eingetragen sind.

Ein drittes Dienstprofil 203 ist für ein Anwendungsszenario "Out of Office" eingerichtet, bei dem Benutzer X für projektbezogene Anfragen im Gegensatz zu privaten Kontakten nicht verfügbar ist. Demzufolge sind Benutzer A und B in die "blocking list" eingetragen, während Benutzer C in der "buddy list" aufgeführt ist. Je nach Anwendungskontext kann eines der Dienstprofile 201 bis 203 oder - falls sinnvoll - eine Kombination von Dienstprofilen aktiviert werden.

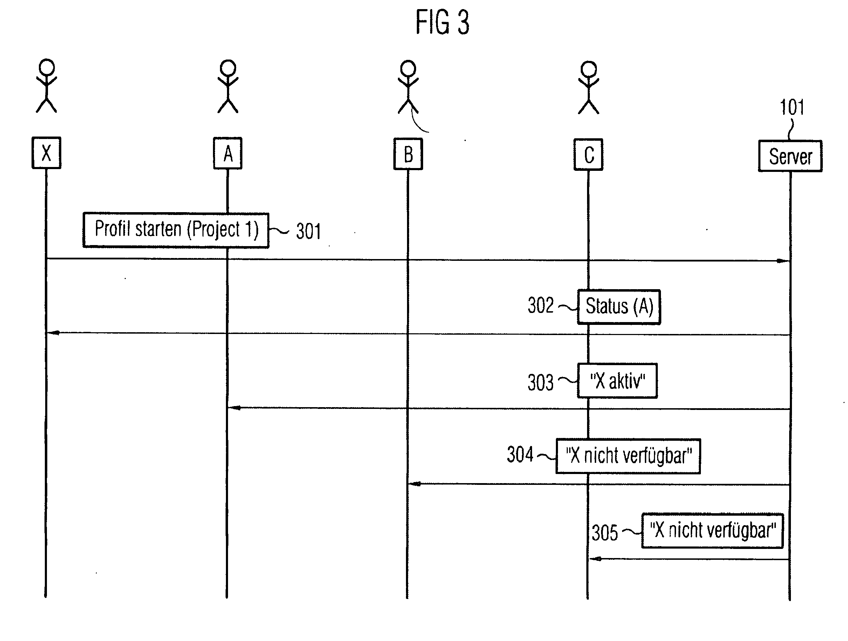

Figur 3 veranschaulicht einen Meldungsaustausch zwischen dem Server 101 und den Benutzern X sowie A bis C bei Aktivierung des ersten Dienstprofils 201, das im Kontext einer Mitarbeit in "Project 1" konfiguriert ist, durch Benutzer X. Zur Aktivierung des ersten Dienstprofils 201 übermittelt Benutzer X eine Meldung 301 mit einer entsprechenden Anforderung an den Server 201. Dort wird die Meldung 301 zunächst auf Gültigkeit überprüft, insbesondere auf Vorliegen eines korrekt konfigurierten, angeforderten Profils. Bei positivem Überprüfungsergebnis übermittelt der Server 101 entsprechend durch das erste Dienstprofil 101 implizierten Anweisungen zunächst eine Meldung 302 mit einer Information über den Anwesenheitszustand des in die "buddy list" eingetragenen Benutzers A an Benutzer X. Außerdem übermittelt der Server 101 auch an Benutzer A eine Meldung 303 über den Anwesenheitszustand von Benutzer X, der nun aktiv und für Benutzer A verfügbar ist. Da Benutzer B und C in die "blocking list" zu "Project 1" eingetragen sind, erhalten die Benutzer B und C entweder automatisch oder erst auf Abfrage jeweils eine Meldung 304, 305 vom Server 101 über den Anwesenheitszustand von Benutzer X, der im vorliegenden Beispiel als nicht verfügbar deklariert wird.

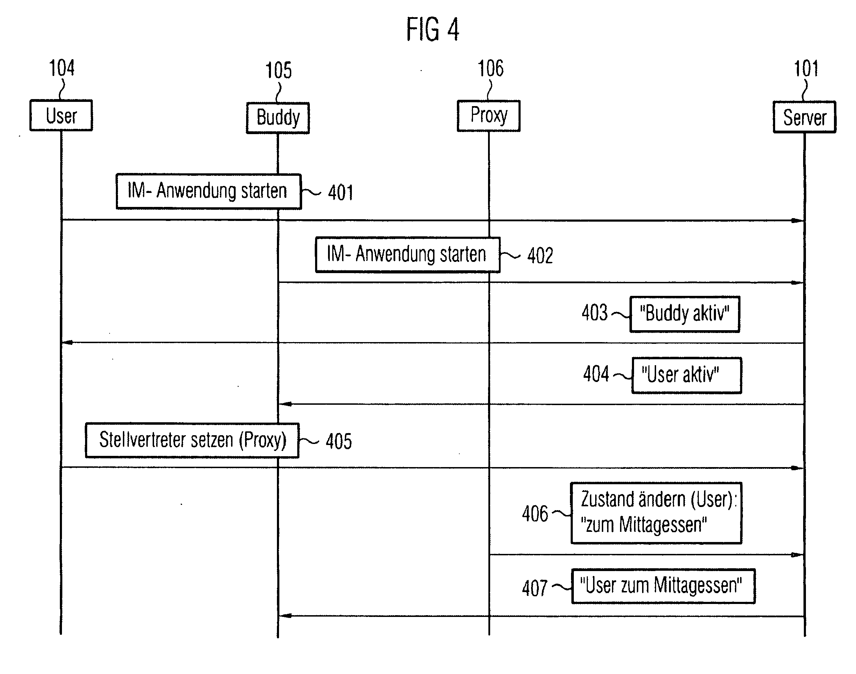

Das in Figur 4 dargestellte Diagramm veranschaulicht einen Meldungsaustausch zwischen den Clients 104 bis 107 und dem Server 101 bei einem Start einer Instant-Messaging-Anwendung und bei einer Änderung einer Anwesenheitsinformation. Zum Start einer Instant-Messaging-Anwendung durch einen Benutzer an einem ersten Client 104 wird eine Meldung 401 mit einer Anforderung zum Start einer Instant-Messaging-Anwendung an den Server 101 übermittelt. Der Server 101 überprüft daraufhin die Berechtigung des Benutzers zum Start einer Instant-Messaging-Anwendung und ruft ein Benutzerprofil ab. Aus dem Benutzerprofil ergibt sich beispielsweise eine konfigurierte Benutzergruppe, deren Mitglieder sich gegenseitig die Berechtigung eingeräumt haben, den anderen Mitgliedern der Benutzergruppe Anwesenheitsinformationen verfügbar zu machen.

Für die nachfolgenden Betrachtungen wird angenommen, daß der Benutzer an dem ersten Client 104 der erste Benutzer innerhalb der Benutzergruppe ist, der eine Instant-Messaging-Anwendung startet und dem daher die Anwesenheitsinformation "aktiv" zugeordnet ist. Aus diesem Grund wird der Benutzer am ersten Client 104 noch nicht über Anwesenheitszustände anderer Benutzer innerhalb der Benutzergruppe informiert. Dies erfolgt erst nach einem Start einer Instant-Messaging-Anwendung eines weiteren Mitgliedes der Benutzergruppe an einem zweiten Client 105.

Zum Start der Instant-Messaging-Anwendung am zweiten Client 105 wird auch in diesem Fall zunächst eine Meldung 402 mit einer Anforderung zum Start einer Instant-Messaging-Anwendung an den Server 101 übermittelt und daraufhin durch den Server 101 überprüft und bearbeitet. Bei erfolgreicher Überprüfung der Anforderung durch den Server 101 wird die Instant-Messaging-Anwendung am zweiten Client 105 bereitgestellt. Außerdem wird der Benutzer am ersten Client 104 mittels einer Meldung 403 über den neuen Anwesenheitszustand des weiteren Mitgliedes der Benutzergruppe informiert. In analoger Weise wird auch das weitere Mitglied der Benutzergruppe am zweiten Client 105 über den Anwesenheitszustand des Benutzers mittels einer Meldung 404 informiert.

Möchte der Benutzer am ersten Client 104 die Aktualisierung seines Anwesenheitszustandes beispielsweise an einen Stellvertreter an einen dritten Client 106 delegieren, so sendet der Benutzer am ersten Client 104 eine Meldung 405 mit einer Anforderung zum Setzen eines Stellvertreters an den Server 101. In dieser Meldung 405 wird der Stellvertreter am dritten Client 106 als zur Veränderung der dem Benutzer am ersten Client 104 zugeordneten Anwesenheitsinformation berechtigter Benutzer bezeichnet. Auf diese Benutzerfreigabe räumt der Server 101 dem Stellvertreter am dritten Client 106 die angeforderte Berechtigung ein. Ändert sich nun beispielsweise der Anwesenheitszustand des Benutzers am ersten Client 104, ohne daß dieser die Aktualisierung der ihm zugeordneten Anwesenheitsinformation selbst veranlaßt, so kann der Stellvertreter am dritten Client 106 dies mittels einer Meldung 406 mit einer Anforderung zur Änderung der dem Benutzer am ersten Client 104 zugeordneten Anwesenheitsinformation veranlassen. Der Server 101 ändert daraufhin bei vorliegender Berechtigung den Anwesenheitszustand des Benutzers am ersten Client 104 und übermittelt eine Meldung 407 über eine Änderung des Anwesenheitszustandes des Benutzers am ersten Client 104 an das weitere Mitglied der Benutzergruppe am zweiten Client 105. Ein typisches Anwendungsbeispiel ist die Aktualisierung einer Anwesenheitsinformation zu einem Benutzer während einer Mittagspause durch die eine dem Benutzer zugeordnete Teamassistentin.

Die Anwendung der vorliegenden Erfindung ist nicht auf das hier beschriebene Ausführungsbeispiel beschränkt.

## Patentansprüche

1. Verfahren zur Bereitstellung einer einem Benutzer (104, 105) eines Kommunikationsdienstes zugeordneten Anwesenheitsinformation (403, 404), bei dem
- eine einen Anwesenheitszustand eines zur Benutzung eines Kommunikationsdienstes registrierten Benutzers bezeichnende Information an einen Server (101) zur Verwaltung von Anwesenheitsinformationen (403, 404) übermittelt wird,
- die an den Server (101) übermittelte Information als eine dem Benutzer zugeordnete Anwesenheitsinformation (403, 404) gespeichert und für vorgebbare erste Benutzer (104, 105) verfügbar gemacht wird,
- dem Benutzer zu vorgebbaren zweiten Benutzern (104, 105) zugeordnete Anwesenheitsinformationen verfügbar gemacht werden,
- eine Ermittlung der vorgebbaren ersten und zweiten Benutzer (104, 105) anhand eines dem Benutzer (104, 105) zugeordneten, aktivierten Dienstprofils erfolgt,
**dadurch gekennzeichnet, daß** auf Benutzerfreigabe einem ausgewählten weiteren Benutzer (106) eine Berechtigung zur Veränderung der dem Benutzer (104) zugeordneten Anwesenheitsinformation (407) eingeräumt wird.

2. Verfahren nach Anspruch 1,
bei dem der Kommunikationsdienst ein Instant-Messaging-Dienst ist.

3. Verfahren nach einem der Ansprüche 1 oder 2,
bei dem die dem Benutzer (104, 105) zugeordnete Anwesenheitsinformation für die vorgebbaren ersten Benutzer (104, 105) abrufbar gemacht wird oder mittels einer Multicast-Nachricht an die vorgebbaren ersten Benutzer (104, 105) übermittelt wird.

4. Kommunikationssystem mit
- Mitteln zur Bereitstellung eines Kommunikationsdienstes,
- einem Server (101) zur Verwaltung von Anwesenheitsinformationen (403, 404) zu Benutzern (104, 105) des Kommunikationsdienstes,
- Mitteln zur Bereitstellung einer Anwesenheitsinformation (403, 404) zu einem Benutzer (104, 105) an vorgebbare erste Benutzer (104, 105) und von Anwesenheitsinformationen (403, 404) zu vorgebbaren zweiten Benutzern (104, 105) an den Benutzer (104, 105),
- Mitteln zur Ermittlung der vorgebbaren ersten und zweiten Benutzer (104, 105) anhand eines dem Benutzer (104, 105) zugeordneten, aktivierten Dienstprofils,
**dadurch gekennzeichnet, daß** Mittel zur Einräumung einer Berechtigung auf Benutzerfreigabe zur Veränderung der dem Benutzer (104, 105) zugeordneten Anwesenheitsinformation (403, 404) für einen ausgewählten weiteren Benutzer (106) vorgesehen sind.

5. Steuerungsprogramm (111), das in einen Arbeitsspeicher (112) einer Recheneinrichtung (113) ladbar ist und zumindest einen Codeabschnitt aufweist, bei dessen Ausführung
- eine Übermittlung einer einen Anwesenheitszustand eines zur Benutzung eines Kommunikationsdienstes registrierten Benutzers (104, 105) bezeichnenden Information an einen Server (101) zur Verwaltung von Anwesenheitsinformationen (403, 404) veranlaßt wird,
- die an den Server (101) übermittelte Information als eine dem Benutzer (104, 105) zugeordnete Anwesenheitsinformation (403, 404) gespeichert und für vorgebbare erste Benutzer (104, 105) verfügbar gemacht wird,
- dem Benutzer (104, 105) zu vorgebbaren zweiten Benutzern (104, 105) zugeordnete Anwesenheitsinformationen (403, 404) verfügbar gemacht werden,
- eine Ermittlung der vorgebbaren ersten und zweiten Benutzer (104, 105) anhand eines dem Benutzer (104, 105) zugeordneten, aktivierten Dienstprofils erfolgt, wenn das Steuerungsprogramm (111) in der Recheneinrichtung (113) abläuft,
**dadurch gekennzeichnet, daß** auf Benutzerfreigabe einem ausgewählten weiteren Benutzer (106) eine Berechtigung zur Veränderung der dem Benutzer zugeordneten Anwesenheitsinformation (407) eingeräumt wird.

## Claims

1. Method for provision of presence data (403, 404) allocated to a user (104, 105) of a communication service, in which
- data characterising the presence state of a user registered to use a communication service is sent to a server (101) for the management of presence data (403, 404),
- the data sent to the server (101) is stored as presence data (403, 404) allocated to the user and is made available for predefinable first users (104, 105),
- presence data allocated to predefinable second users (104, 105) is made available to the user,
- the predefinable first and second users (104, 105) are determined on the basis of an activated service profile allocated to the user (104, 105),
**characterised in that** authorisation to change the presence data (407) allocated to the user (104) is given to another selected user (106) upon user release.

2. Method according to claim 1, in which the communication service is an instant messaging service.

3. Method according to one of claims 1 or 2, in which the presence data allocated to the user (104, 105) is made retrievable for the predefinab1e first users (104, 105), or is communicated by means of a multicast message to the predefinable first users (104, 105).

4. Communication system with
- means for provision of a communication service,
- a server (101) for the management of presence data (403, 404) of users (104, 105) of the communication service,
- means of providing presence data (403, 404) on a user (104, 105) to predefinable first users (104, 105) and of presence data (403, 404) on predefinable second users (104, 105) to the user (104, 105),
- means for determining the predefinable first and second users (104, 105) on the basis of an activated service profile allocated to the user (104, 105),
**characterised in that** means are provided for granting authorisation to change the presence data (403, 404) allocated to the user (104, 105) for another selected user (106) upon user release.

5. Control program (111) which is loadable into the working memory (112) of a computer device (113) and has at least one code section which, when executed,
- effects a communication of data characterising a presence state of a user (104, 105) registered to use a communication service to be sent to a server (101) for the management of presence data (403, 404),
- the data sent to the server (101) is stored as presence data (403, 404) allocated to the user (104, 105) and is made available to predefinable first users (104, 105),
- presence data (403, 404) on predefinable second users (104, 105) is made available to the user (104, 105),
- predefinable first and second users (104, 105) are determined on the basis of an activated service profile allocated to the user (104, 105),
when the control program (111) in the computer device (113) runs, **characterised in that** authorisation to change the presence data (407) allocated to the user is given to another selected user (106) upon user release.

## Revendications

1. Procédé de mise à disposition d'une information de présence (403, 404) affectée à un utilisateur (104, 105) d'un service de communication, dans lequel
- une information désignant un état de présence d'un utilisateur enregistré pour l'utilisation d'un service de communication est communiquée à un serveur (101) destiné à la gestion d'informations de présence (403, 404),
- l'information communiquée au serveur (101) en tant qu'information de présence (403, 404) affectée à l'utilisateur est enregistrée et rendue disponible à des premiers utilisateurs prédéfinissables (104, 105),
- des informations de présence affectées à des deuxièmes utilisateurs (104, 105) sont rendues disponibles à l'utilisateur,
- une détermination des premiers et deuxièmes utilisateurs prédéfinissables (104, 105) a lieu à l'aide d'un profil de service activé,
**caractérisé en ce que**, en cas de validation d'un utilisateur, une autorisation de modifier l'information de présence (447) affectée à l'utilisateur (104) est accordée à un autre utilisateur (106) sélectionné.

2. Procédé selon la revendication 1,
dans lequel le service de communication est un service de messagerie instantanée.

3. Procédé selon l'une quelconque des revendications 1 ou 2,
dans lequel l'information de présence affectée à l'utilisateur (104, 105) est rendue appelable pour le premier utilisateur prédéfinissable (104, 105) ou est communiquée au premier utilisateur prédéfinissable (104, 105) au moyen d'un message multidiffusé.

4. Système de communication doté
- de moyens de mise à disposition d'un service de communication,
- d'un serveur (101) destiné à la gestion d'informations de présence (403, 404) sur des utilisateurs (104, 105) du service de communication,
- de moyens de mise à disposition d'une information de présence (403, 404) sur un utilisateur (104, 105) à des premiers utilisateurs prédéfinissables (104, 105) et d'informations de présence (403, 404) sur des deuxièmes utilisateurs prédéfinissables (104, 105) à l'utilisateur (104, 105),
- de moyens de détermination des premiers et deuxièmes utilisateurs prédéfinissables (104, 105) à l'aide d'un profil de service activé et affecté à l'utilisateur (104, 105),
**caractérisé en ce que** des moyens pour accorder une autorisation, en cas de validation d'un utilisateur, afin de modifier l'information de présence (403, 404) affectée à l'utilisateur (104, 105) sont prévus pour un autre utilisateur sélectionné (105).

5. Programme de commande (111), qui peut être chargé dans une mémoire de travail (112) d'un système de calcul (113) et comporte au moins une section de codes, au cours de l'exécution duquel
- est ordonnée une communication d'une information, désignant un état de présence d'un utilisateur (104, 145) enregistré pour utiliser un service de communication, à un serveur (101) destiné à la gestion d'informations de présence (403, 404),
- l'information communiquée au serveur (101) est enregistrée en tant qu'information de présence (403, 404) affectée à l'utilisateur (104, 105) et rendue disponible à des premiers utilisateurs prédéfinissables (104, 105),
- des informations de présence (403, 404) affectées à des deuxièmes utilisateurs prédéfinissables (104, 105) sont rendues disponibles à l'utilisateur (104, 105),
- une détermination des premiers et deuxièmes utilisateurs prédéfinissables (104, 105) a lieu à l'aide d'un profil de service activé et affecté à l'utilisateur (104, 105),
lorsque le programme de commande (111) se déroule dans le système de calcul (113),
**caractérisé en ce que**, en cas de validation d'un utilisateur, une autorisation pour modifier l'information de présence (407) affectée à l'utilisateur est accordée à un autre utilisateur sélectionné (106).
